# FASCICULE DE BREVET EUROPEEN

(11) **EP 1 620 704 B1**
(45) Date de publication et mention de la délivrance du brevet: **14.10.2009**
(21) Numéro de dépôt: 04742847.9
(22) Date de dépôt: 20.04.2004
(51) Int. Cl.: G01J 5/00, B60Q 1/52, G01J 5/06

(54) **DISPOSITIF D'EXPLORATION OPTIQUE ET VEHICULE COMPORTANT UN TEL DISPOSITIF**
OPTISCHE ABTASTVORRICHTUNG UND DAMIT AUSGESTATTETES FAHRZEUG
OPTICAL EXPLORATION DEVICE AND VEHICLE COMPRISING SAID DEVICE

(30) Priorité: 07.05.2003 FR 0305566
(43) Date de publication de la demande: 01.02.2006
(73) Titulaire: Peugeot Citroën Automobiles S.A., 78140 Vélizy Villacoublay (FR)
(72) Inventeur: LEFRANC, Francis, F-92150 Suresnes (FR)
(74) Mandataire: Timoney, Ian Charles Craig
(86) Numéro de dépôt international: PCT/FR2004/050161
(87) Numéro de publication internationale: WO 2004/099742

(56) Documents cités:
- EP-A- 1 162 478
- WO-A-99/27335
- US-A1- 2002 126 002

## Description

L'invention se rapporte à un dispositif d'exploration optique ainsi qu'à un véhicule comportant un tel dispositif.

L'invention concerne plus particulièrement un dispositif d'exploration optique, notamment pour la détection de l'angle mort d'un véhicule, comprenant des moyens de détection infrarouge thermiques passifs, du type, par exemple, thermopile.

Les thermopiles sont des capteurs thermiques infrarouge ayant une sensibilité en longueur d'ondes comprise par exemple entre 0 et 14 µm environ. Ces capteurs passifs convertissent une température détectée dans une zone de visée et la convertissent en un signal électrique. Ces capteurs thermopiles mesurent une température absolue, c'est-à-dire qu'ils n'ont pas besoin de mesurer une variation de température.

Les documents EP847519 et W09525322 décrivent des dispositifs d'exploration optique pour véhicules utilisant des capteurs infrarouge du type thermopile.

Un problème rencontré dans l'utilisation de ces dispositifs réside dans le fait que des détections parasites peuvent être fréquentes en raison notamment du rayonnement du soleil. En effet, la source de chaleur diffusée par le soleil et réfléchie par un revêtement routier ou un autre objet peut induire une détection d'obstacle erronée.

Pour résoudre ce problème, le dispositif décrit dans le document EP847519 compare les mesures faites dans une ou plusieurs zones d'exploration avec une zone de référence. Cependant, cette solution n'est pas totalement satisfaisante car dans certaines configurations de rayonnement direct ou indirect du soleil, des détections parasites peuvent subsister.

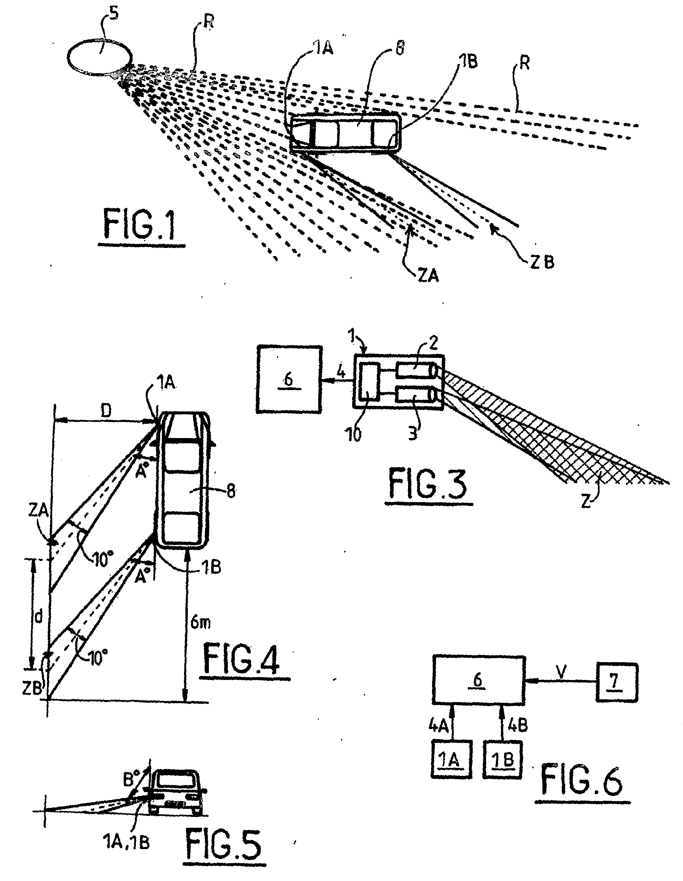

En effet, la figure 1 représente schématiquement, et à titre d'exemple, un véhicule comportant deux capteurs 1A, 1B explorant respectivement deux zones distinctes ZA, ZB. En fonction de la position relative du soleil 5, des capteurs 1A, 1B, et des zones de détection ZA, ZB, les mesures thermiques correspondant respectivement aux deux zones ZA, ZB peuvent être différentes et représentatives de l'intrusion d'un objet chaud tel qu'un véhicule. Dans l'exemple représenté, le capteur avant détecte un objet chaud (rayons du soleil) alors que le capteur arrière ne le voit pas. Cette mauvaise fiabilité de détection reste valable par analogie lorsqu'un seul capteur explore une ou une pluralité de zones adjacentes.

Une autre solution connue du document W09525322 consiste à ne tenir compte (par filtrage) que des mesures situées au-delà d'un seuil calculé en fonction des conditions météorologiques. Plus précisément, le seuil est relevé ou abaissé en fonction du nombre de "bruits parasites" détectés sur une zone de référence et dans un période de référence.

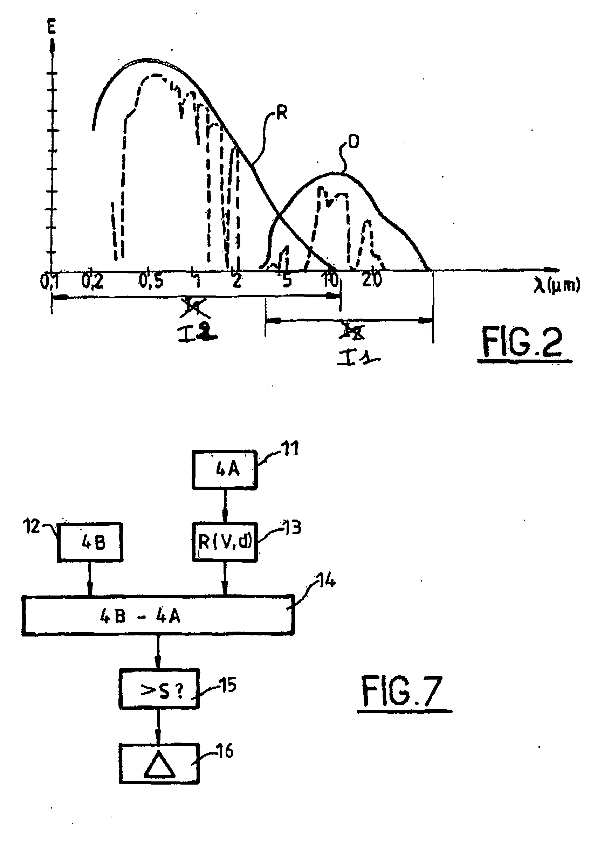

Cette solution ne résout pas davantage le problème des détections parasites dues à certaines configurations des rayonnements directs ou indirects du soleil. Par ailleurs, les solutions qui réalisent un filtre pour supprimer le rayonnement du soleil s'exposent à une conséquence plus grave qui est la non-détection d'un objet bien réel. En effet, comme représenté à la figure 2, le rayonnement solaire R émet des signaux dans la zone O dans laquelle un objet tel qu'un véhicule est également susceptible d'émettre un rayonnement.

Un but de la présente invention est de pallier tout ou partie des inconvénients de l'art antérieur relevés ci-dessus.

A cette fin, le dispositif d'exploration selon l'invention, par ailleurs conforme à la définition générique qu'en donne le préambule ci-dessus, comprend des seconds moyens (3) de détection destinés à mesurer l'énergie solaire directe ou indirecte (5) dans un second intervalle (I2) de longueur d'onde, le dispositif délivrant un signal (4) de sortie qui est fonction des mesures des premiers (2) et des seconds (3) moyens de détection. Le dispositif est essentiellement caractérisé en ce les premiers (I1) et les seconds (I2) intervalles de longueur d'onde se chevauchent en partie, et en ce qu'au moins une partie du signal de sortie (4) délivré par le dispositif (1) comprend une soustraction et/ou une comparaison des signaux représentatifs respectivement de l'intensité détectée par les premiers (2) et les seconds moyens (3) de détection, à au moins une même longueur d'onde située dans la partie de chevauchement des premiers (I1) et des seconds (I2) intervalles.

Par ailleurs, l'invention peut comporter l'une ou plusieurs des caractéristiques suivantes :
- les seconds moyens de détection sont de type photodiode et/ou phototransistor et/ou photorésistance,
- la plage de chevauchement entre le premier (I1) et le second (I2) intervalle de longueur d'onde est inférieure à 8 µm environ.

L'invention concerne également un véhicule comportant au moins un dispositif d'exploration conforme à l'une quelconque des caractéristiques ci-dessus.

Selon d'autres particularités avantageuses de l'invention :
- l'axe d'exploration des ondes du dispositif est orienté sensiblement vers l'arrière du véhicule et forme avec l'axe longitudinal du véhicule un angle compris entre 10° et 170° environ, et de préférence de l'ordre de 30 à 50° environ,
- l'axe d'exploration des ondes du dispositif est orienté sensiblement vers le sol et forme avec l'axe vertical un angle compris entre 90° et 180° environ, et de préférence de l'ordre de 100°,
- le véhicule comporte au moins deux dispositifs d'exploration optique disposés de façon décalée selon sa direction longitudinale,
- le véhicule comporte au moins deux dispositifs de détection orientés de façon à viser successivement une même zone de détection, le véhicule comportant des moyens de détermination de la vitesse du véhicule, et des moyens de traitement de données des signaux de sortie des dispositifs de détection conformés pour synchroniser les signaux de sortie des dispositifs de détection en fonction de l'espacement entre les zones de visée de ces derniers et de la vitesse du véhicule, pour soustraire ou comparer les signaux et éliminer les objets fixes de la zone de détection,
- le véhicule comporte une pluralité de paires de dispositifs de détection, les deux dispositifs de détection de chaque paire étant décalés selon la direction longitudinale du véhicule et orientés relativement de façon à viser successivement une même zone de détection, les paires de dispositif de détection étant conformées pour viser des zones adjacentes et distinctes,
- le véhicule comporte au moins un dispositif de détection de référence, orienté de façon à viser le sol sensiblement verticalement,
- les moyens de traitement de données sont conformés pour comparer la différence des signaux de sortie de deux dispositifs de détection ayant balayé successivement la même zone, pour déterminer la présence d'un objet mobile,
- les moyens de traitement de données effectuent la comparaison temporelle des signaux de sortie de deux dispositifs de détection balayant successivement des zones adjacentes, pour déterminer le sens de déplacement éventuel d'un objet mobile traversant les zones de détection,

D'autres particularités et avantages apparaîtront à la lecture de la description ci-après, faite en référence aux figures dans lesquelles :
- la figure 1 représente une vue schématique de dessus d'un véhicule comportant deux dispositifs d'exploration optique,
- la figure 2 représente un exemple de répartition de l'énergie de E rayonnement du soleil R et d'un objet O en fonction de la longueur d'onde λ,
- la figure 3 représente schématiquement la structure d'un dispositif d'exploration selon l'invention,
- les figures 4 et 5 représentent respectivement des vues de dessus et de derrière d'un véhicule comportant deux dispositifs d'exploration selon l'invention,
- la figure 6 représente schématiquement les moyens de traitement des mesures réalisées par les deux dispositifs d'exploration du véhicule des figures 4 et 5,
- la figure 7 représente un logigramme illustrant schématiquement le traitement des mesures réalisées par les deux dispositifs d'exploration du véhicule des figures 4 et 5,
- les figures 8 et 9 représentent respectivement des vues de dessus et de derrière d'un véhicule comportant deux dispositifs d'exploration selon l'invention conformés chacun pour explorer deux zones de détection distinctes,
- la figure 10 représente un logigramme illustrant schématiquement le traitement des mesures réalisées par les deux dispositifs d'exploration du véhicule des figures 8 et 9,
- la figure 11 représente une vue de dessus d'un véhicule comportant deux dispositifs d'exploration selon l'invention, conformés chacun pour explorer une pluralité de zones de détection distinctes,
- les figures 12 et 13 représentent respectivement des vues de biais et en coupe du rétroviseur des véhicules des figures 4, 5, 8, 9 et 11.

Le dispositif 1 d'exploration optique représenté à la figure 3 comprend des premiers moyens 2 de détection infrarouge thermiques passifs, tels qu'une ou plusieurs thermopiles, ayant une plage de sensibilité dans un premier intervalle I1 de longueur d'onde. La thermopile 2 a, par exemple, une sensibilité en longueur d'onde comprise entre 0 et 14 µm environ.

Selon l'invention, le dispositif 1 d'exploration comporte des seconds moyens 3 de détection destinés à mesurer l'énergie solaire directe ou indirecte 5 dans un second intervalle I2 de longueur d'onde qui chevauche en partie le premier I1 intervalle de longueur d'onde (cf. figure 2).

Les seconds moyens 3 de détection sont constitués, par exemple, d'une ou plusieurs photodiode et/ou phototransistor et/ou photorésistance. Par soucis de simplification, les seconds moyens 3 de détection seront appelés "second capteur" dans la suite de la description. Le second capteur 3 a une sensibilité en longueur d'onde comprise, par exemple, entre 0,1 et 40 µm environ et de préférence entre 0,1 et 8 µm.

La thermopile 2 et le second capteur 3 peuvent être associés chacun à une lentille destinée à définir un angle de détection. De même, la thermopile 2 et le second capteur 3 peuvent être associé chacun à un filtre 10 destinés à borner leur plage de sensibilité. La thermopile 2 et le second capteur 3 peuvent partager la même lentille et/ou le même filtre.

La lentille peut permettre d'obtenir un angle de vision compris entre 1 et 180 degrés par exemple. De préférence, la thermopile 2 et le second 3 capteur ont chacun un angle de vision de l'ordre de 10 degrés environ (en horizontal et en vertical).

De préférence, la thermopile 2 et le second capteur 3 sont disposés de façon parallèle, les angles de détection étant parallèles ou faiblement décalés. La thermopile 2 et le second capteur 3 sont orientés relativement de façon à viser successivement ou simultanément une même zone Z de détection. De plus, la distance entre la thermopile 2 et le second capteur 3 est faible par rapport à la distance entre le dispositif 1 et la zone de détection Z.

Selon cette configuration, le dispositif 1 peut délivrer un signal 4 de sortie qui est fonction des mesures de la thermopile 2 et du second capteur 3. Le couplage de ces deux mesures effectuées sur un intervalle de sensibilité commun permet au dispositif 1 de déterminer s'il y a présence ou non de rayonnement de type solaire dans la zone Z de détection et donc d'éviter les détections erronées. En effet, le dispositif permet de vérifier si le rayonnement détecté est dû à un objet chaud et au soleil ou uniquement au soleil, ou uniquement à un objet chaud.

Comme représenté à la figure 3, le signal de sortie 4 peut être fourni à un moyen 6 de traitement de données tel qu'un calculateur. En variante, le calculateur 6 peut faire partie du dispositif 1.

Au moins une partie du signal de sortie 4 délivré par le dispositif 1 peut comprendre une soustraction et/ou une comparaison des signaux représentatifs respectivement de l'intensité détectée par la thermopile 2 et par le second capteur 3, à au moins une même longueur d'onde située dans la partie de chevauchement des premiers I1 et des seconds I2 intervalles.

De préférence, l'énergie mesurée par le second capteur 3 est soustraite à l'énergie mesurée par la thermopile 2 et, dans le cas où le résultat obtenu est supérieur à un seuil déterminé, le dispositif peut conclure de manière fiable et sûre qu'un objet "chaud" est présent dans la zone Z, indépendamment de tout rayonnement solaire direct ou indirect.

Les figures 4 et 5 illustrent un premier exemple de mise en oeuvre de l'invention sur un véhicule 8 automobile. Le véhicule 8 comporte deux dispositifs 1A, 1 B d'exploration optique conformes à la description ci-dessus. Les deux dispositifs 1A, 1B sont disposés de façon décalée selon la direction longitudinale du véhicule et distants l'un de l'autre d'une distance de préférence supérieure à 1 m. Comme représenté les deux capteurs 2,3 peuvent être disposés sur un même flanc du véhicule 8.

Les axes d'exploration des dispositifs 1A, 1 B sont orientés sensiblement vers l'arrière du véhicule et forment, avec l'axe longitudinal du véhicule un angle A, compris entre 10° et 170° environ, et de préférence de l'ordre de 35°.

Les axes d'exploration des dispositifs 1A, 1 B sont orientés sensiblement vers le sol et forment avec l'axe vertical un angle B compris entre 90° et 180° environ, et de préférence de l'ordre de 100°.

Les deux dispositifs 1A, 1 B de détection sont orientés de façon à viser successivement une même zone ZA=ZB de détection située de préférence à une distance latérale D du véhicule comprise entre 0,5 et 5m.

Le véhicule 8 comprend des moyens de traitement 6 tel qu'un calculateur et des moyens 7 de détermination de vitesse V tel qu'un capteur de vitesse relié au calculateur 6 (figure 6). De cette façon, les signaux de sortie 4A, 4B des deux dispositifs de détection 1A, 1B sont fournis au calculateur 6 qui les synchronise en fonction de l'espacement d connu entre les zones de visée ZA, ZB deux dispositifs 1A, 1B et de la vitesse V du véhicule.

Cette synchronisation des signaux 4A,4B permet au calculateur 6 de soustraire et/ou de comparer les signaux 4A, 4B représentatifs de la même zone Z de détection, de façon à éliminer les objets fixes détectés (pont mur, panneau...).

La figure 7 illustre schématiquement un exemple de traitement des informations issues des deux dispositifs 1A, 1 B par le calculateur 6.

Au cours d'une première étape 11, le premier dispositif 1A mesure le rayonnement dans la zone ZA à un premier instant et délivre un signal de sortie 4A correspondant.

Le second dispositif 1 B mesure ensuite le rayonnement dans la zone ZB adjacente et délivre un signal de sortie 4B correspondant (étape 12). Le calculateur 6 calcule la mesure retardée du premier dispositif 1 A en fonction de la vitesse V du véhicule et de l'espacement longitudinal d entre les zones détectées ZA et ZB (étape 13), de façon à soustraire à l'étape 14 suivante les signaux 4A, 4B correspondant à la même zone de détection (ZA=ZB). Le calculateur 6 peut ensuite comparer le résultat de cette soustraction avec une valeur seuil S (étape 15). Dans le cas ou ce résultat 4A-4B est supérieur à la valeur seuil S, le calculateur 6 peut déclencher un signal d'alerte (étape 16), pour avertir le conducteur de la présence d'un objet dans la zone détectée.

Les moyens 6 de traitement de données peuvent également déterminer le sens d'intrusion d'un objet dans la zone Z de détection, c'est-à-dire le sens de déplacement de l'objet par rapport au véhicule 8. Ce sens de déplacement peut être déterminé par les moyens 6 de traitement, soit en utilisant le signe (positif ou négatif) du résultat 14 de la soustraction des signaux 4A, 4B correspondant à la même zone de détection, soit en déterminant temporellement la zone dans laquelle (ZA ou ZB) l'objet est détecté en premier.

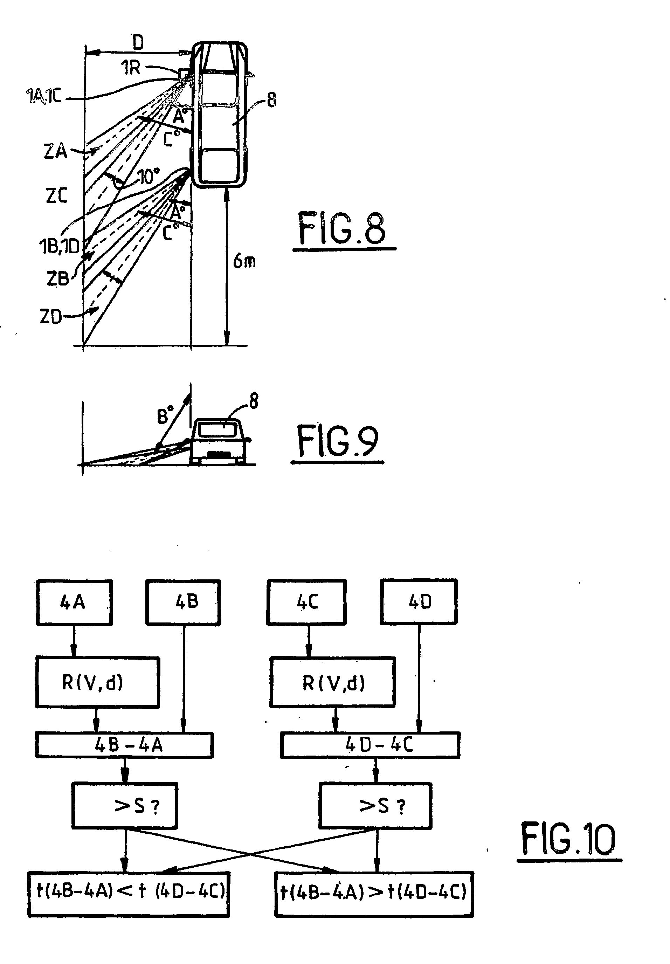

Les figures 8 et 9 illustrent un autre mode de réalisation de l'invention dans lequel le véhicule 8 comporte cinq dispositifs 1A, 1B, 1C, 1D, 1R d'exploration disposés sur un même flan du véhicule. Deux dispositifs 1A, 1C sont disposés à l'avant du véhicule, par exemple dans un rétroviseur, et deux autres dispositifs 1 B, 1 D sont disposés sensiblement à l'arrière du véhicule, par exemple dans un feu arrière.

Un premier dispositif 1A avant est associé à un premier dispositif 1 B arrière de façon à viser successivement la même zone de détection ZA=ZB. Ces deux dispositifs 1A, 1B ont chacun des axes d'exploration orientés sensiblement vers l'arrière du véhicule et formant, avec l'axe longitudinal du véhicule un angle C compris entre 10° et 170° environ, et de préférence de l'ordre de 50°.

Un second dispositif 1C avant est associé à un second dispositif 1 D arrière, de façon à viser successivement la même zone de détection ZC=ZD. Ces deux dispositifs 1C, 1D ont chacun des axes d'exploration orientés sensiblement vers l'arrière du véhicule et formant, avec l'axe longitudinal du véhicule un angle A compris entre 10° et 170° environ, et de préférence de l'ordre de 35°.

Les zones de détection ZA, ZB, ZC, ZD des quatre dispositifs sont situées de préférence à une distance latérale D du véhicule de l'ordre de 4m environ.

Les quatre dispositifs de détection sont donc associés en paires (1A, 1B; 1C, 1D). Les dispositifs de détection de chaque paire visent successivement une même zone de détection.

Le cinquième dispositif 1 R de détection, qui est facultatif, est orienté de façon à viser le sol, sensiblement à l'aplomb du rétroviseur, de façon à réaliser une détection de référence destinée, par exemple, à être comparée aux mesures des autres dispositifs, à fournir la température du revêtement routier... Le dispositif 1 R de référence peut être particulièrement avantageux pour permettre de détecter un véhicule qui stagne entre ou sur deux zones adjacentes de détection des autres dispositifs, par comparaison de sa mesure avec les mesures des autres dispositifs.

La figure 10 illustre le traitement des mesures effectuées par les quatre premiers dispositifs 1A, 1B, 1C, 1D par les moyens de traitement de données.

Comme précédemment, après la mesure du rayonnement thermique dans les quatre zones ZA, ZB, ZC, ZD à un premier instant, les quatre premiers dispositifs 1A, 1B, 1C, 1D délivrent respectivement quatre signaux de sortie 4A, 4B, 4C, 4D.

Le calculateur 6 calcule les mesures retardées des dispositifs avant 1A, 1C en fonction de la vitesse V du véhicule et de l'espacement longitudinal entre les paires correspondantes de zones détectées ZA, ZB et ZC, ZD.

Le calculateur peut ensuite soustraire les signaux 4B-4A; 4D-4C correspondant à une même zone de détection ZA=ZB, ZC=ZD. Dans le cas où les résultats de ces soustractions sont supérieurs à un seuil S déterminé, il y a présence d'un objet dans la zone concernée. Par ailleurs, le calculateur 6 peut déterminer le sens d'intrusion de l'objet en déterminant si l'intrusion a eu lieu (instant t) d'abord (t(4B-4A)<t(4D-4A)) dans la zone avant ZA=ZB surveillée par la première paire de dispositifs 1A, 1 B, ou d'abord (t(4B-4A)>t(4D-4C)) dans la zone arrière ZC=ZD, surveillée par la seconde paire de dispositifs 1C, 1 D (figure 10).

Après que les moyens 6 de traitement de données concluent à la présence d'un objet à proximité du véhicule 8, la comparaison de la mesure du dispositif 1R de référence avec les mesures des autres dispositifs peut permettre de suivre le mouvement relatif de cet objet par rapport au véhicule 8 avec une encore plus grande fiabilité et précision.

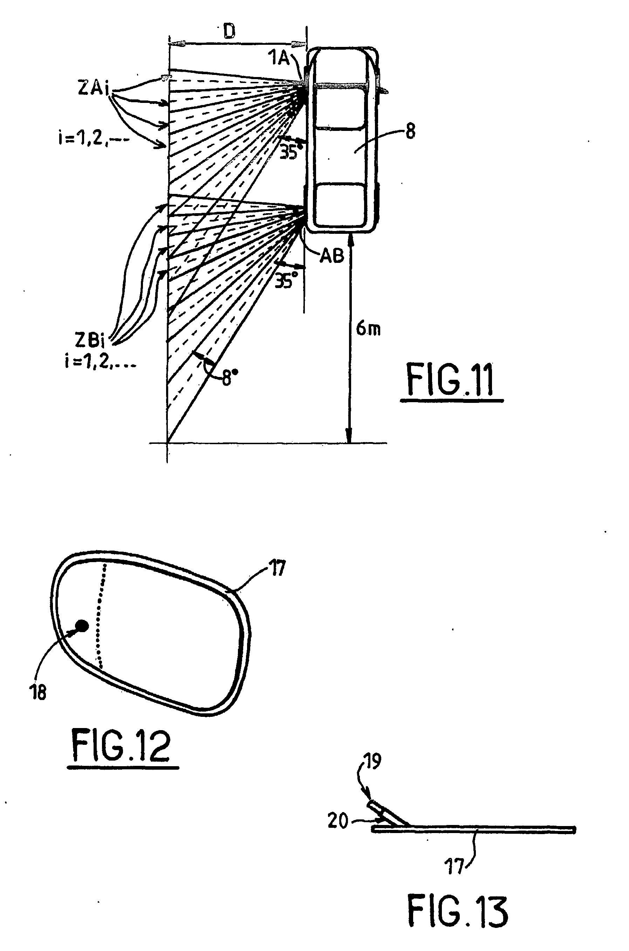

Dans encore une autre variante de réalisation représentée à la figure 11, un véhicule peut comporter deux dispositifs 1A, 1 B d'exploration optique émettant chacun une pluralité de faisceaux d'exploration ZAi, ZBi (i=1 à n; avec n étant un entier supérieur à 1).

Les faisceaux ZAi, ZBi des deux dispositifs 1 A, 1 B sont associés respectivement en paires de façon à viser successivement une pluralité de zones distinctes respectives. C'est à dire que les faisceaux ZAi d'un premier dispositif 1A sont associés respectivement avec les faisceaux ZBi du second dispositif 1 B, de façon à viser successivement une pluralité de zones distinctes respectives.

Le traitement des signaux mesurés peut être analogue à celui décrit ci-dessus en référence aux autres modes de réalisation.

On conçoit donc que le dispositif d'exploration optique selon l'invention, tout en étant de structure simple et peu coûteuse, permet une détection fiable d'un objet dans une zone d'exploration, même en cas d'un rayonnement solaire direct ou indirect.

Le dispositif d'exploration optique peut être avantageusement associé à des moyens d'alerte tels qu'un signal lumineux 18 situé dans un rétroviseur 17 du véhicule. Le signal lumineux peut être obtenu, par exemple, par une source de lumière telle qu'une ou plusieurs diodes 19 disposées dans un guide 20 orienté en direction des yeux du conducteur du véhicule. Le guide 20 est incliné, par exemple, selon un angle d'environ 25 degrés par rapport au plan de la glace du rétroviseur 17.

## Revendications

1. Dispositif d'exploration optique, notamment pour la détection de l'angle mort d'un véhicule, comprenant des premiers moyens (2) de détection infrarouge thermiques passifs, du type par exemple thermopile, ayant une plage de sensibilité dans un premier intervalle (I1) de longueur d'onde, des seconds moyens (3) de détection destinés à mesurer l'énergie solaire directe ou indirecte (5) dans un second intervalle (I2) de longueur d'onde, les premiers (2) et les seconds (3) moyens de détection étant disposés et orientés relativement de façon à viser successivement ou simultanément une même zone (Z) de détection, le dispositif délivrant un signal (4) de sortie qui est fonction des mesures des premiers (2) et des seconds (3) moyens de détection, **caractérisé en ce que** les premiers (I1) et les seconds (I2) intervalles de longueur d'onde se chevauchent en partie, et **en ce qu'**au moins une partie du signal de sortie (4) délivré par le dispositif (1) comprend une soustraction et/ou une comparaison des signaux représentatifs respectivement de l'intensité détectée par les premiers (2) et les seconds moyens (3) de détection, à au moins une même longueur d'onde située dans la partie de chevauchement des premiers (I1) et des seconds (I2) intervalles.

2. Dispositif selon la revendication 1, **caractérisé en ce que** les seconds moyens (3) de détection sont de type photodiode et/ou phototransistor et/ou photorésistance.

3. Dispositif selon l'une quelconque des revendications 1 à 2, **caractérisé en ce que** la plage de chevauchement entre le premier (I1) et le second (I2) intervalle de longueur d'onde est inférieure à 8 µm environ.

4. Véhicule automobile **caractérisé en ce qu'**il comporte au moins un dispositif (1) d'exploration optique conforme à l'une quelconque des revendications précédentes.

5. Véhicule selon la revendication 4, **caractérisé en ce que** l'axe d'exploration des ondes du dispositif (1A, 1B) est orienté sensiblement vers l'arrière du véhicule et forme avec l'axe longitudinal du véhicule un angle (A) compris entre 10° et 170° environ, et de préférence de l'ordre de 30 à 50° environ.

6. Véhicule selon la revendication 4 ou 5, **caractérisé en ce que** l'axe d'exploration des ondes du dispositif (1A, 1B) est orienté sensiblement vers le sol et forme avec l'axe vertical un angle (B) compris entre 90° et 180° environ, et de préférence de l'ordre de 100°.

7. Véhicule selon l'une quelconque des revendications 4 à 6, **caractérisé en ce qu'**il comporte au moins deux dispositifs (1A, 1 B) d'exploration optique disposés de façon décalée selon la direction longitudinale du véhicule.

8. Véhicule selon l'une quelconque des revendications 4 à 7, **caractérisé en ce qu'**il comporte au moins deux dispositifs (1A, 1 B) de détection orientés de façon à viser successivement une même zone (Z) de détection, le véhicule comportant des moyens (7) de détermination de la vitesse (V) du véhicule, et des moyens de traitement (6) de données des signaux de sortie (4) des dispositifs de détection (1A, 1B) conformés pour synchroniser les signaux de sortie (4) des dispositifs de détection (1A, 1B) en fonction de l'espacement entre les zones de visée de ces derniers et de la vitesse (V) du véhicule, pour soustraire ou comparer les signaux (4) et éliminer les objets fixes de la zone (Z) de détection.

9. Véhicule selon l'une quelconque des revendications 4 à 8, **caractérisé en ce qu'**il comporte une pluralité de paires (1A, 1B; 1C, 1D) de dispositifs de détection, les deux dispositifs de détection de chaque paire étant décalés selon la direction longitudinale du véhicule et orientés relativement de façon à viser successivement une même zone de détection (ZA, ZB, ZC, ZD), les paires (1A, 1B; 1C, 1D) de dispositif de détection étant conformées pour viser des zones adjacentes et distinctes.

10. Véhicule selon l'une quelconque des revendications 8 à 9, **caractérisé en ce qu'**il comporte au moins un dispositif (1R) de détection de référence, orienté de façon à viser le sol sensiblement verticalement.

11. Véhicule selon l'une quelconque des revendications 8 à 10, **caractérisé en ce que** les moyens de traitement (6) de données sont conformés pour comparer la différence des signaux (4) de sortie de deux dispositifs (1A, 1B) de détection ayant balayé successivement la même zone, pour déterminer la présence d'un objet mobile.

12. Véhicule selon la revendication 11, **caractérisé en ce que** les moyens (6) de traitement de données effectuent la comparaison temporelle des signaux (4) de sortie de deux dispositifs (1A, 1 B) de détection balayant successivement des zones adjacentes, pour déterminer le sens de déplacement éventuel d'un objet mobile traversant les zones (ZA, ZB) de détection.

## Claims

1. Optical exploration device, particularly for detecting the blind spot of a vehicle, comprising a first means (2) of passive thermal infrared detection, of the thermopile type for example, having an area of sensitivity in a first wavelength range (I1), second detection means (3) designed to measure the direct or indirect solar energy (5) in a second wavelength range (12), the first detection means (2) and the second detection means (3) being placed and oriented relatively so as to aim successively or simultaneously at one and the same detection zone (Z), the device delivering an output signal (4) that is a function of the measurements of the first detection means (2) and of the second detection means (3), **characterized in that** the first wavelength range (I1) and the second wavelength range (12) partly overlap, and **in that** at least a portion of the output signal (4) delivered by the device (1) comprises a subtraction and/or a comparison of the signals representative respectively of the intensity detected by the first detection means (2) and the second detection means (3) at at least one and the same wavelength situated in the portion of overlap of the first range (I1) and second range (I2).

2. Device according to Claim 1, **characterized in that** the second detection means (3) are of the photodiode and/or phototransistor and/or photoresistor type.

3. Device according to either one of Claims 1 or 2, **characterized in that** the area of overlap between the first wavelength range (I1) and the second wavelength range (12) is less than approximately 8 µm.

4. Motor vehicle, **characterized in that** it comprises at least one optical exploration device (1) according to any one of the preceding claims.

5. Vehicle according to Claim 4, **characterized in that** the axis of exploration of the waves of the device (1A, 1B) is oriented substantially towards the rear of the vehicle and forms, with the longitudinal axis of the vehicle, an angle (A) of between 10° and 170° approximately, and preferably of the order of approximately 30 to 50°.

6. Vehicle according to Claim 4 or 5, **characterized in that** the axis of exploration of the waves of the device (1A, 1B) is oriented substantially towards the ground and forms, with the vertical axis, an angle (B) of between approximately 90° and 180°, and preferably of the order of 100°.

7. Vehicle according to any one of Claims 4 to 6, **characterized in that** it comprises at least two optical exploration devices (1A, 1B) placed in a manner offset from the longitudinal direction of the vehicle.

8. Vehicle according to any one of Claims 4 to 7, **characterized in that** it comprises at least two detection devices (1A, 1B) oriented so as to aim successively at one and the same detection zone (Z), the vehicle comprising means (7) for determining the speed (V) of the vehicle, and means (6) for processing data of the output signals (4) from the detection devices (1A, 1B) formed in order to synchronize the output signals (4) of the detection devices (1A, 1B) as a function of the spacing between the zones aimed at by the latter and the speed (V) of the vehicle, in order to subtract or compare the signals (4) and eliminate the fixed objects of the detection zone (Z).

9. Vehicle according to any one of Claims 4 to 8, **characterized in that** it comprises a plurality of pairs (1A, 1B; 1C, 1D) of detection devices, the two detection devices of each pair being offset from the longitudinal direction of the vehicle and oriented relatively so as to aim successively at one and the same detection zone (ZA, ZB, ZC, ZD), the pairs (1A, 1B; 1C, 1D) of detection devices being formed in order to aim at adjacent and distinct zones.

10. Vehicle according to either one of Claims 8 or 9, **characterized in that** it comprises at least one reference detection device (1R) oriented so as to aim substantially vertically at the ground.

11. Vehicle according to any one of Claims 8 to 10, **characterized in that** the data processing means (6) are formed to compare the difference in the output signals (4) of two detection devices (1A, 1B) having successively swept the same zone, in order to determine the presence of a moving object.

12. Vehicle according to Claim 11, **characterized in that** the data processing means (6) make the time comparison of the output signals (4) of two detection devices (1A, 1B) successively sweeping adjacent zones, in order to determine the direction of possible movement of a moving object passing through the detection zones (ZA, ZB).

## Patentansprüche

1. Optische Abtastvorrichtung, insbesondere für die Erfassung des toten Winkels eines Fahrzeugs, mit ersten passiven thermischen Infrarot-Erfassungsmitteln (2) beispielsweise des Typs Thermosäule, die einen Empfindlichkeitsbereich in einem ersten Wellenlängenintervall (I1) haben, zweiten Erfassungsmitteln (3) die dazu bestimmt sind, die direkte oder indirekte Sonnenenergie (5) in einem zweiten Wellenlängenintervall (12) zu messen, wobei die ersten Erfassungsmittel (2) und die zweiten Erfassungsmittel (3) relativ zueinander in der Weise angeordnet und orientiert sind, dass sie nacheinander oder gleichzeitig auf dieselbe Erfassungszone (Z) gerichtet sind, wobei die Vorrichtung ein Ausgangssignal (4) liefert, das von den Messungen der ersten Erfassungsmittel (2) und der zweiten Erfassungsmittel (3) abhängt, **dadurch gekennzeichnet, dass** das erste Wellenlängenintervall (I1) und das zweite Wellenlängenintervall (12) teilweise überlappen und dass wenigstens ein Teil des von der Vorrichtung (1) ausgegebenen Ausgangssignals (4) eine Differenzbildung und/oder einen Vergleich von Signalen enthält, die die von den ersten Erfassungsmittel (2) bzw. von den zweiten Erfassungsmitteln (3) erfasste Intensität bei wenigstens einer gleichen Wellenlänge, die in dem Überlappungsteil des ersten Intervalls (I1) und des zweiten Intervalls (12) liegt, repräsentieren.

2. Vorrichtung nach Anspruch 1, **dadurch gekennzeichnet, dass** die zweiten Erfassungsmittel (3) vom Typ Photodiode und/oder Phototransistor und/oder Photowiderstand sind.

3. Vorrichtung nach einem der Ansprüche 1 bis 2, **dadurch gekennzeichnet, dass** der Überlappungsbereich zwischen dem ersten Wellenlängenintervall (I1) und dem zweiten Wellenlängenintervall (12) kleiner als etwa 8 µm ist.

4. Kraftfahrzeug, **dadurch gekennzeichnet, dass** es wenigstens eine optische Abtastvorrichtung nach einem der vorhergehenden Ansprüche enthält.

5. Fahrzeug nach Anspruch 4, **dadurch gekennzeichnet, dass** die Abtastachse der Wellen der Vorrichtung (1A, 1B) im Wesentlichen zur Rückseite des Fahrzeugs gerichtet ist und mit der Längsachse des Fahrzeugs einen Winkel (A) bildet, der im Bereich von etwa 10° bis etwa 170° und vorzugsweise in der Größenordnung von etwa 30° bis etwa 50° liegt.

6. Fahrzeug nach Anspruch 4 oder 5, **dadurch gekennzeichnet, dass** die Abtastachse der Wellen der Vorrichtung (1A, 1B) im Wesentlichen zum Boden gerichtet ist und mit der vertikalen Achse einen Winkel (B) bildet, der im Bereich von etwa 90° bis etwa 180° und vorzugsweise in der Größenordnung von 100° liegt.

7. Fahrzeug nach einem der Ansprüche 4 bis 6, **dadurch gekennzeichnet, dass** es wenigstens zwei optische Abtastvorrichtungen (1A, 1B) enthält, die in Längsrichtung des Fahrzeugs versetzt angeordnet sind.

8. Fahrzeug nach einem der Ansprüche 4 bis 7, **dadurch gekennzeichnet, dass** es wenigstens zwei Erfassungsvorrichtungen (1A, 1B) enthält, die in der Weise orientiert sind, dass sie nacheinander auf dieselbe Erfassungszone (Z) zielen, wobei das Fahrzeug Mittel (7) zum Bestimmen der Geschwindigkeit (V) des Fahrzeugs und Datenverarbeitungsmittel (6) für die Ausgangssignale (4) der Erfassungsvorrichtungen (1A, 1B) enthält, um die Ausgangssignale (4) der Erfassungsvorrichtung (1A, 1B) in Abhängigkeit von dem Zwischenraum zwischen den Zielzonen dieser letzteren und der Geschwindigkeit (V) des Fahrzeugs zu synchronisieren, um die Signale (4) zu subtrahieren oder zu vergleichen und um feste Objekte der Erfassungszone (Z) zu beseitigen.

9. Fahrzeug nach einem der Ansprüche 4 bis 8, **dadurch gekennzeichnet, dass** sie mehrere Paare (1A, 1B; 1C, 1D) von Erfassungsvorrichtungen enthält, wobei die zwei Erfassungsvorrichtungen jedes Paars in Längsrichtung des Fahrzeugs zueinander versetzt sind und relativ zueinander in der Weise orientiert sind, dass sie nacheinander auf dieselbe Erfassungszone (ZA, ZB, ZC, ZD) zielen, wobei die Paare (1A, 1B; 1C, 1D) von Erfassungsvorrichtungen dazu ausgelegt sind, auf benachbarte und verschiedene Zonen zu zielen.

10. Fahrzeug nach einem der Ansprüche 8 bis 9, **dadurch gekennzeichnet, dass** sie wenigstens eine Referenzerfassungsvorrichtung (1R) enthält, die in der Weise orientiert ist, dass sie im Wesentlichen vertikal auf den Boden zielt.

11. Fahrzeug nach einem der Ansprüche 8 bis 10,
**dadurch gekennzeichnet, dass** die Datenverarbeitungsmittel (6) dazu ausgelegt sind, die Differenz der Ausgangssignale (4) der zwei Erfassungsvorrichtungen (1A, 1B), die nacheinander dieselbe Zone überstrichen haben, zu vergleichen, um das Vorhandensein eines beweglichen Objekts zu bestimmen.

12. Fahrzeug nach Anspruch 11, **dadurch gekennzeichnet, dass** die Datenverarbeitungsmittel (6) den zeitlichen Vergleich der Ausgangssignale (4) von zwei Erfassungsvorrichtungen (1A, 1B), die nacheinander benachbarte Zonen überstreichen, ausführen, um die eventuelle Verlagerungsrichtung eines beweglichen Objekts, das sich durch die Erfassungszonen (ZA, ZB) bewegt, zu bestimmen.
